# EUROPEAN PATENT SPECIFICATION

(11) **EP 2 198 178 B1**
(45) Date of publication and mention of the grant of the patent: **09.11.2016**
(21) Application number: 07849699.9
(22) Date of filing: 19.10.2007
(51) Int. Cl.: F16D 55/2265

(54) **GUIDE FOR FLOATING CALLIPERS OF A VEHICLE DISC BRAKE**
FÜHRUNG FÜR EINEN SCHWIMMSATTEL EINER FAHRZEUGSCHEIBENBREMSE
GUIDE POUR ÉTRIERS FLOTTANTS D'UN FREIN À DISQUE DE VÉHICULE

(43) Date of publication of application: 23.06.2010
(73) Proprietor: Freni Brembo S.p.A., 24035 Curno (Bergamo) (IT)
(72) Inventor: CARRARA, Marco, I-20062 Cassano D'Adda, Milano (IT); SALA, Paolo, I-24030 Villa D'Adda, Bergamo (IT); CANTONI, Carlo, I-24020 Gorle, Bergamo (IT)
(74) Representative: Mitola, Marco
(86) International application number: PCT/IT2007/000730
(87) International publication number: WO 2009/050751

(56) References cited:
- EP-A- 0 253 707
- WO-A-2008/049841
- DE-A1- 10 245 027
- JP-A- 57 012 131

## Description

### Field of application

The object of the present invention is a guide for floating callipers of a vehicle disc brake and a disc brake with floating calliper provided with one or more guides according to the invention.

### Prior art

In general, a disc braking system of the type with floating calliper comprises a support structure, arranged astride of the braking disc and suitable for being mounted on a fixed portion of the vehicle, and at least one floating structure (calliper) slidingly mounted by special guides on the support structure. The sliding (floating) movement of the calliper (in installed condition) is parallel to the axis of rotation of the disc (hereinafter axial direction).

Generally, the floating structure (hereinafter calliper for simplicity) comprises aside portion, arranged externally to the support structure (generally on the hub side of the braking system), and a shelf portion, which extends from the side portion in axial direction (towards the wheel end) on the support structure.

The calliper carries slidingly associated through at least one pin two braking pads, arranged inside a special seating obtained in the support structure so that they may contact the braking surfaces of the disc. A first pad, called active pad, is pushed against the disc directly by pushing means seated in the side portion of the floating calliper. The second pad, or reaction pad, opposite the first pad, is pushed against the disc by the shelf portion of the floating calliper during the sliding of the calliper itself following the reaction resulting from the interaction between the first pad and the disc.

Moreover, in general, a guide for gloating callipers comprises a bushing, which is inserted in a sliding seat obtained in the floating callipers or in the support structure of the disc brake, and a pin, which is in turn slidingly inserted into the bushing with the exception of an end coupling (threaded) portion which is fixed to the support structure or to the calliper (according to which of these two parts the bushing carries).

The application of a closing element is in several cases provided into the guide to prevent the entrance of foreign matters (dust, water, etc.). To this end, the bushing is provided with a special tubular coupling portion that protrudes externally relative to the seating of the bushing itself and wherein the closing element is inserted.

According to the prior art solutions, see e.g. EP 0 253 707, the closing element couples with such portion snap-wise or by interference. To prevent the closing element from penetrating too much into the bushing, thus interfering with the free movement of the pin, the closing element is often provided with an enlarged head suitable for abutting on the outer edge of the bushing.

The enlarged head further allows the removal of the closing element should this become necessary for the disc brake maintenance. In fact at the head, and in particular at the external portion thereof protruding relative to the bushing, it is possible to grasp manually or with a suitable tool.

While a guide of the type described above performs its functions, however it exhibits some disadvantages.

A first disadvantage is related to the fact that the operations for removing the closing element can easily lead to damaging, sometimes even irreparably, the element itself, with consequent decrease of the barrier capability and need of replacing the part. In fact, especially in the presence of deposits or for the gluing between the closing element and the bushing, the removal may require the application of a strong force. Such force would necessarily be concentrated on a limited surface, substantially consisting of the above external protruding portion of the head.

Moreover, it may happen that in an attempt to remove the closing element, the head is torn leaving the closing element fitted into the bushing. In that case, completing the removal may become difficult.

A second disadvantage is related to the fact that the entrance of foreign matters is substantially prevented only by the losing element. Therefore, should such element be accidentally removed, the guide would unavoidably remain exposed to such phenomenon.

### Disclosure of the invention

The object of the present invention therefore is to eliminate the disadvantages of the prior art mentioned above by providing a guide for floating callipers of vehicle disc brakes which should allow easier removal of the closing element with less risks of damaging the element itself.

A further object of the present invention is to provide a guide for floating callipers of vehicle disc brakes which should offer barrier capabilities to foreign matters even in the case of accidental loss of the closing element.

A further object of the present invention is to provide a guide for floating callipers of vehicle disc brakes with a closing element that may be retained on the bushing in a safer manner.

A further object of the present invention is to provide a guide for floating callipers of vehicle disc brakes which should be inexpensive to make.

### Brief description of the drawings

The technical features of the invention, according to the above objects, are clearly found in the contents of the claims below and the advantages of the same will appear more clearly from the following detailed description, made with reference to the annexed drawings, which show a purely exemplifying and non-limiting embodiment thereof, wherein:

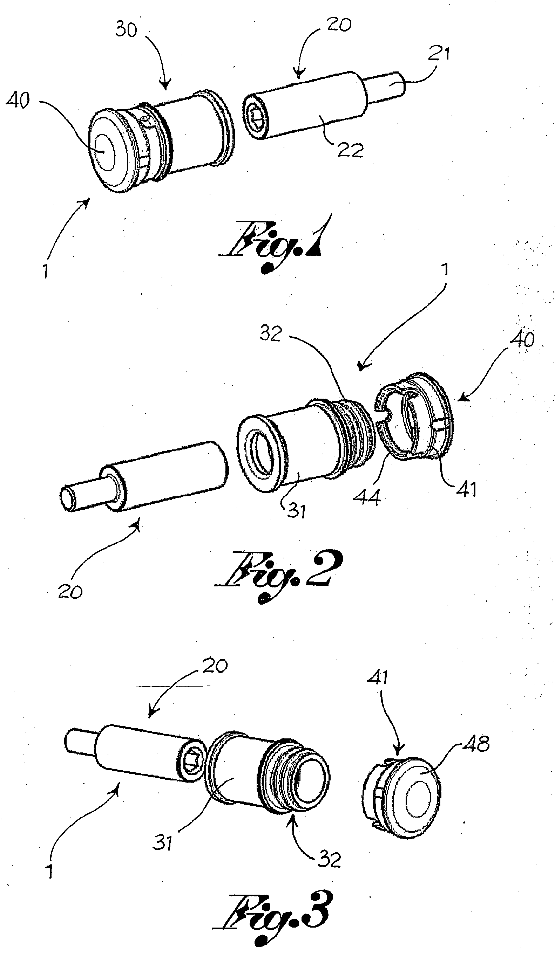

- Figures 1, 2 and 3 show different perspective exploded views of a guide made according to a preferred embodiment of the invention;
- Figure 4 shows a side view of the guide shown in figures 1 to 3, fully assembled;
- Figure 5 shows a side exploded view of the guide shown in Figure 4;
- Figure 6 shows a side partly cutaway view of the guide according to the invention along the line indicated by arrows VI-VI shown in Figure 5;

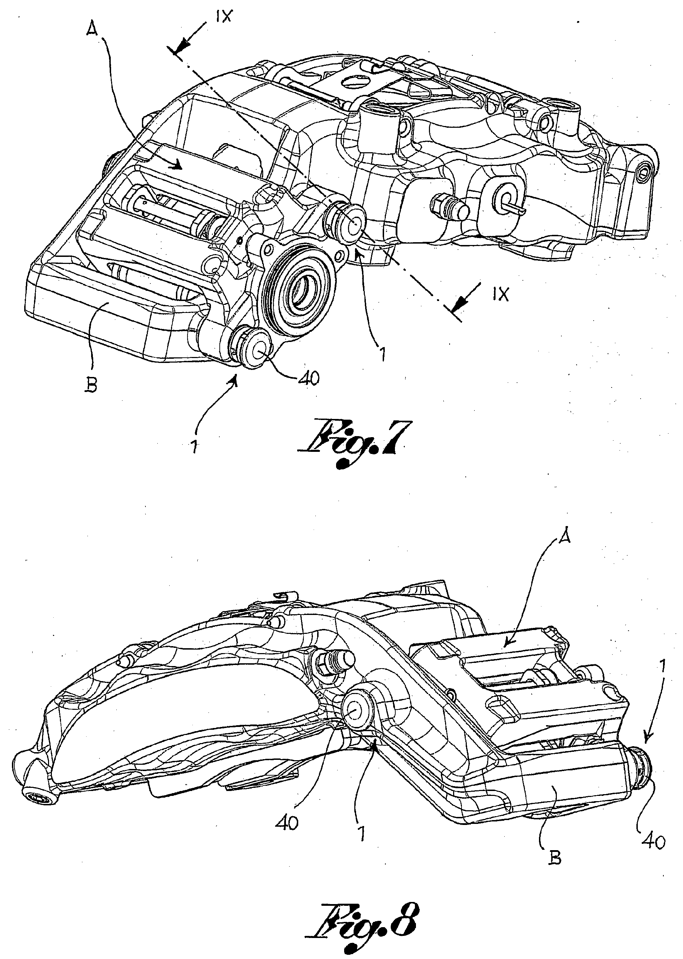

- Figures 7 and 8 show two perspective views of a disc braking system with floating calliper provided with guides according to the invention, respectively from the hub side and from the wheel side;
- Figure 9 shows a cutaway view of a guide according to the invention along the line indicated by arrows IX-IX shown in Figure 7, mounted on a braking system with the pin integral with the support structure and the bushing integral with the floating calliper;
- figure 10 shows a perspective view of a detail of a guide according to the invention relating to a closing element;
- figure 11 a side view of the wheel side of a detail of the braking system illustrated in figures 7 and 8; and
- figure 12 shows a view of a guide according to the invention cutaway along the line indicated by arrows XII-XII shown in Figure 11, mounted on a braking system with the pin integral with the floating calliper and the bushing integral with the support structure.

### Detailed description

With reference to the annexed drawings, reference numeral 1 globally denotes a guide for floating callipers of disc brakes according to the invention.

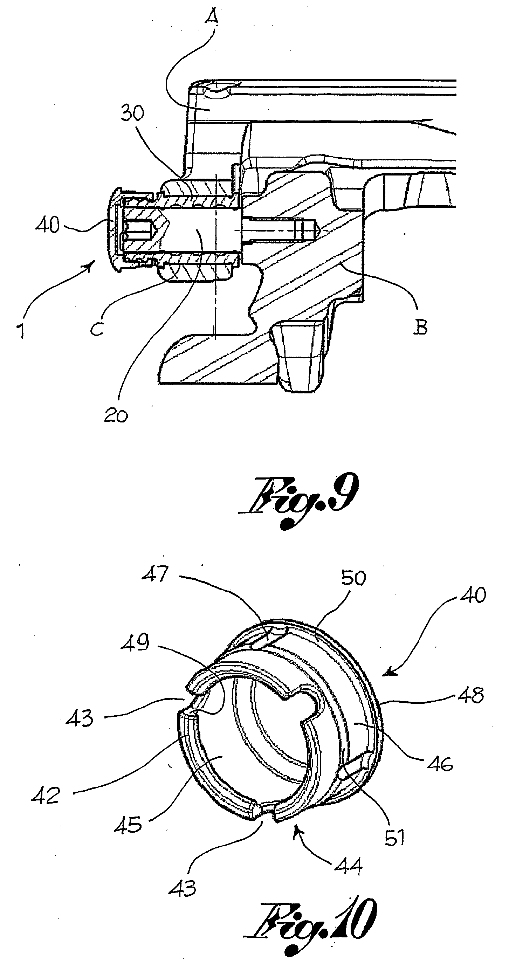

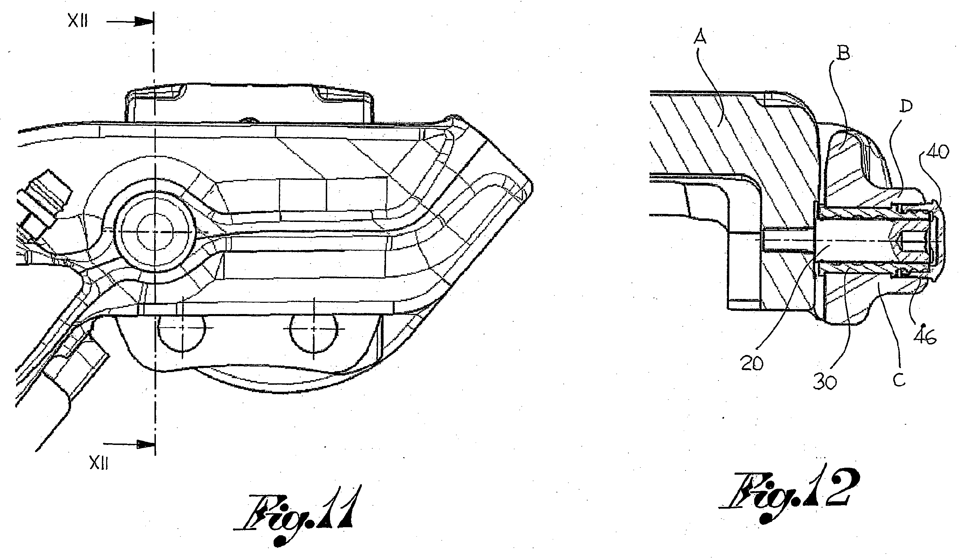

As can be seen in particular in figures 9 and 12, guide 1 is intended for being arranged between a floating calliper A and a support structure B of a disc brake.

Guide 1 comprises a pin 20, preferably made of metal material (for example steel), intended to be fixed by a first end portion 21 (hereinafter coupling portion) to the support structure B (see figure 9) or, alternatively, to the floating callipers A (see figure 12).

Preferably, the above coupling portion 11 is threaded. Advantageously, the fixing of the pin to the support structure or to the calliper can also be joint-wise.

Pin 20 is provided with a second end portion 22 (hereinafter sliding portion) - preferably with larger diameter than the coupling one - at which it is slidingly inserted in a special sliding seat C. The latter may be obtained in the floating calliper (see figure 9) or in the support structure (see figure 12), according to which of these two parts must be integral with the pin itself.

Preferably, pin 20 is made in a single body (by casting or turning). However, it is possible to provide for solutions wherein the pin is made in multiple distinct parts. For example, the coupling portion may be fixed to the sliding portion joint-wise or by screwing. As an alternative, the pin may consist of a single base part whereto a sleeve (preferably of metal, optionally also of plastic material) is associated at the sliding portion. As an alternative, the pin may consist of a tubular body, which forms the sliding portion, and a bolt, which, inserted in the tubular body, abuts on the latter with the head to fix by the opposite end to the support structure or to the calliper.

Guide 1 comprises a bushing 30 intended for being inserted into the above sliding seat C for receiving in turn internally, in sliding relation, the sliding portion 22 of pin 20.

Functionally, bushing 30 must in the first place ensure sliding smoothness of pin 20 in the sliding seat C. In the second place, bushing 20 must absorb any shocks and dampen the vibrations resulting from the braking system, interrupting in braking the chain of transmission of vibrations from the brake disc to the support bracket, to the advantage of the driving comfort.

Preferably, to this end, bushing 30 is made of plastic material. The bushing may be made, for example, with a plastic material based on neoprene or, as an alternative, based on ethylenpropylendiene.

In order to prevent the entrance of foreign matters therein, guide 1 further comprises a closing element 40 removably associated to bushing 30 in diametrically opposite position compared to that taken in operation by the coupling portion 21 of pin 20.

According to the invention, the closing element 40 is arranged completely external to said bushing.

By the expression "arranged completely external" it is meant that the closing element does not occupy the interior of the bushing, but without excluding embodiments wherein such closing element exhibits a portion that partly inserts into the bushing itself.

As can be seen in particular in Figure 9, the arrangement of the closing element outside the bushing makes the removal operations simpler and safer.

In fact, the force to be exerted to remove the closing element must not be necessarily applied only on the head portion protruding relative to the bushing (as in the prior art solutions), but it can be distributed on a larger surface. Moreover, should the head portion be torn, the remaining portion of the closing element is not fitted into the bushing and can be easily eliminated, as it is directly accessible, from the outside.

According to the invention, bushing 30 comprises a first tubular portion 31 intended for inserting into the sliding seat C and a second tubular portion 32 intended for being placed in the proximity of the inlet of the sliding seat C. The closing element 40 couples on said second portion 32.

In assembled condition, the second tubular portion 32 may be arranged in the proximity of the inlet of sliding seat C so as to fully protrude outside thereof (as shown in Figure 9) or so as to be partly or entirely arranged therein (as shown in Figure 12).

According to the invention, the closing element 40 is provided with a cup body 41 suitable for receiving at least partly the second tubular portion 32 of bushing 30 therein.

More in detail, as can be seen in the annexed figures, the closing element 40 may be provided with a head 48 that protruding radially relative to the cup body 41 defines a projecting frame 50.

As shall be resumed hereinafter, while head 48 and in particular the corresponding projecting frame 50 constitute zones where grasping is particularly easy during the operations of removal of the closing element, they are not the only grasping points.

Preferably, the closing element 40 couples snap-wise on bushing 30. However, other fixing solutions may be provided, for example by screwing.

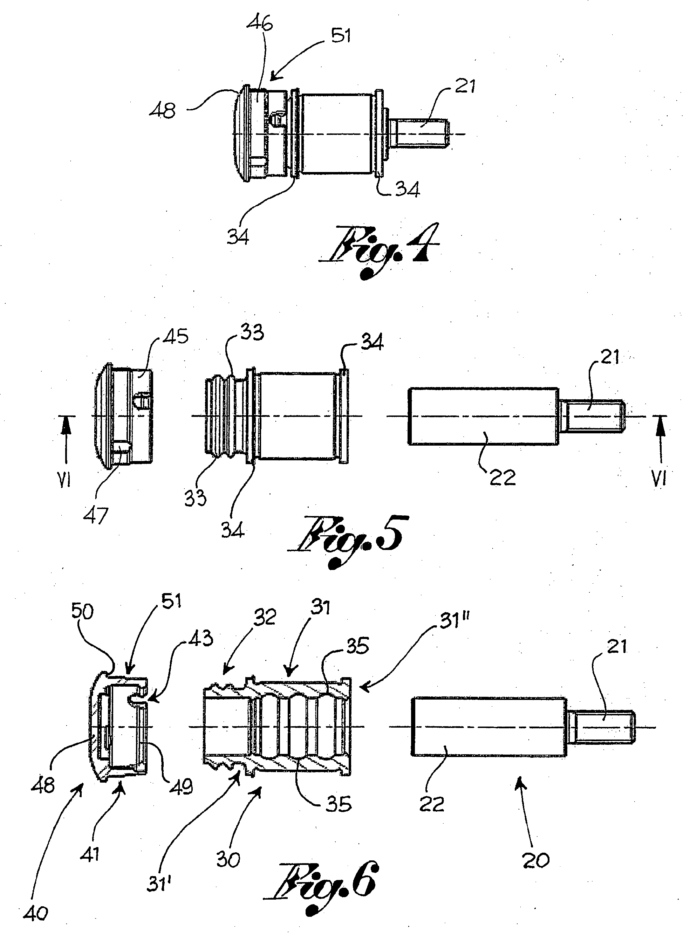

More in detail, as shown in Figure 4 to 6, the second tubular portion 32 of the bushing is externally provided with rubs 33 parallel to one another.

According to the invention, the cup body 41 is provided with one or more teeth 42 suitable for engaging in retaining on ribs 33 obtained externally in the second tubular portion 32 of bushing 30.

Teeth 42 are obtained in the proximity of edge 44 of the cup body 41.

More in detail, teeth 42 are defined by a shaped protuberance 49 that projects inwards of the cup body 41 following edge 44 thereof. Protuberance 49 may consist of an annular element continuous or interrupted at times.

Advantageously, embodiments may be envisaged (not shown in the attached figures) wherein the teeth are obtained on two or more rows arranged at different heights of the cup body, having pitch corresponding to that of the bushing ribs with which they must engage.

According to the invention, the cup body 41 exhibits one or more longitudinal notches 43 that extend starting from edge 44 to a predetermined height, thus defining two or more free appendices 45. The shaped protuberance 49 is thus divided into as many portions, each corresponding to a tooth 42.

The longitudinal notches 43 interrupt the continuity of the cup body at the above annular protuberance 49, allowing the elastic deformation of the free appendices 45. Operatively, this facilitates the insertion of teeth 42 between ribs 33 and therefore the insertion of the closing element 40 on the second tubular portion 32 of bushing 30.

The longitudinal notches 43 further allow a simpler management of the moulding operations of the closing element 40. The presence of the free appendices 45 and thus, the possibility of elastic deformation of the cup body at the shaped protuberance (that defines an undercut) in fact facilitate the removal of the closing element from the manufacturing mould.

Preferably, as can be seen in particular in Figure 10, in order not to weaken the cup body, three longitudinal notches spaced by about 120° from one another are provided.

According to the invention, the cup body 41 exhibits at least one annular portion 46 enlarged relative to the free appendices 45. More in detail, such enlarged annular portion 46 extends from head 49 up to the free appendices 45, connecting thereto by a step 51.

Operatively, such enlarged annular portion 46 and in particular the above step 51 constitute alternative zones of application of the force for the removal of the closing element. In particular, the application of force at step 51 also facilitates the deformation of the free appendices 45.

The above enlarged annular portion 46 is intended for engaging in interference relation on the portion of the braking system (floating calliper A or support structure B) wherein the sliding seat C is obtained.

More in detail, as can be seen in particular in Figures 11 and 12, on support structure B (or on calliper A) the inlet of the sliding seat C may be defined by a shaped fitting appendix D having an inner diameter greater than that of the remaining portion of seat C and corresponding to that of the enlarged annular portion 46 of the closing element 40. In this way, the closing element can be held into position in a steadier manner.

This solution should preferably be adopted for the guides arranged on the wheel side of the braking systems, since they are more exposed to external strains (such as water jets under pressure) as compared to those arranged on the hub side. However, nothing prevents adopting such solution for the guides on the hub side too.

According to a particularly preferred solution, the above enlarged annular portion 46 is provided with a plurality of longitudinal grooves 47 that extend from head 48 up to the free appendices 45.

Functionally, such longitudinal grooves 47 allow venting the air comprised between the closing element 40 and the floating calliper A or the support structure B of the disc brake in the case the enlarged annular portion 46 engages by interference on one of these two portions of the braking system.

Advantageously, the longitudinal grooves 47 are staggered relative to notches 43 so as to not weaken the cup body.

In accordance with a preferred embodiment illustrated in particular in Figure 10, the longitudinal grooves 47 are spaced by about 120° from one another and staggered by about 60° relative to notches 43.

Advantageously, the closing element is made of plastic material, for example based on polyphtalammide or based on nylon.

Preferably, in both cases the plastic material is charged with glass, in the case of polyphtalammide by about 45% by weight and in the case of nylon by about 30% by weight.

According to a particular embodiment, the second tubular portion 32 of bushing 30 (that is, the portion suitable for engaging with the closing element) has an inner diameter larger than that of the sliding portion 22 of pin 20, so as to allow a clearance between the two portions.

According to an alternative embodiment, the second tubular portion 32 of bushing 30 (that is, the portion suitable for engaging with the closing element) may exhibit an inner profile substantially corresponding to that of the sliding portion 22 of pin 20.

In this way, in the proximity of the inlet of guide 1 the bushing may go in strict contact (while being sliding) with the pin, preventing easy access to foreign matters. This is made possible by the fact that the closing element 40 is arranged externally to bushing 30 and does not arrange between the bushing and the pin. Therefore, in the event of accidental loss of the closing element, the guide is in any case partially protected by the entrance of foreign matters.

More in detail, as can be seen in figures 9 and 12, at the first tubular portion 31 bushing 30 exhibits a corrugated inner profile defined by a plurality of annular grooves 35 suitable for reducing the contact surface between the bushing and the pin. In this way, the friction between the two portions is reduced and the free sliding of the pin is facilitated.

Optionally, according to a further solution, the annular grooves 35 may be partly or completely filled with lubricant.

Advantageously, bushing 30 is provided with centring means 34 by which it is held into position in the sliding seat during the movement of the pin.

According to a preferred solution, such centring means comprise two annular projections 34, obtained on the exterior of the bushing, at the two ends 31' and 31" of the first tubular portion 31, and intended for abutting on the edges that define the ends of the sliding seat C.

The guide according to the invention is removable in easier manner thanks to the fact that the closing element is arranged outside the bushing. In this way, the risks of damaging the element itself are lower. Should the head be torn, the removal of the remaining portion of the closing element poses no problems.

A further advantage resulting from the guide according to the invention is in the fact that the bushing can go in strict contact with the pin at the inlet zone of the guide, that is, in the portion intended for supporting the closing element. This considerably reduces the possibility that foreign matters can enter into the guide even in the case of accidental loss of the closing element.

A further advantage given by the guide according to the invention is in the fact that it is possible to provide a connection by interference between the closing element and the portion of the braking system wherein the sliding seat is obtained. This connection may add to the main one between the bushing and the closing element, reducing the probabilities of accidental loss of such element.

The invention thus conceived thus achieves the intended purposes.

Of course, in the practical embodiment thereof, it may take shapes and configurations differing from that illustrated above without departing from the present scope of protection.

Moreover, all the parts may be replaced by technically equivalent ones and the sizes, shapes and materials used may be whatever according to the requirements.

## Claims

1. Guide for floating callipers of a vehicle disc brake, intended for being arranged between a support structure (B) of a disc brake and a floating calliper (A), comprising:
- a pin (20), intended for being fixed by a coupling portion (21) to said support structure (B) or to said floating calliper (A); and for being slidingly guided with a sliding portion (22) inside a sliding seat (C) obtained in said floating calliper (A) or in said support structure (B);
- a bushing (30) intended for being inserted in said sliding seat (C) and for receiving internally in sliding relation the sliding portion (22) of said pin (20); and
- a closing element (40) removably associated to said bushing (30) in opposite position relative to the coupling portion (21) of said pin (20) for preventing the entrance of foreign matters into said guide (1)said closing element (40) being arranged completely external to said bushing (30)
wherein said bushing (30) comprises a first tubular portion (31) intended for inserting in said sliding seat (C) and a second tubular portion (32) intended for being placed in the proximity of the inlet of said sliding seat (C), said closing element (40) coupling on said second portion (32) and being provided with a cup body (41) suitable for receiving at least partly the second tubular portion (32) of said bushing (30) therein, said second tubular portion (32) being externally provided with ribs (33) and said cup body (41) being provided with one or more teeth (42) suitable for engaging in retaining on said ribs (33),
**characterised in that** said teeth (42) are obtained in the proximity of the edge (44) of said cup body (41), which exhibits one or more longitudinal notches (43) that define two or more free appendices (45) at said edge (44) and **in that** said cup body (41) exhibits at least one annular portion (46) enlarged relative to said free appendices (45), said enlarged annular portion (46) being intended for engaging in interference relation on said floating calliper (A) or on said support structure (B).

2. Guide according to claim 1, **characterised in that** said closing element (40) is coupled snap-wise on said bushing (30).

3. Guide according to claim 1 or 2, wherein said teeth (42) are obtained on said free appendices (41).

4. Guide according to any one of the previous claims, wherein said enlarged tubular portion (46) is provided with a plurality of longitudinal grooves (47) for venting the air comprised between said closing element (40) and said floating calliper (A) or said support structure (B) in the case said enlarged annular portion (46) engages by interference on one of the latter.

5. Guide according to the previous claim, wherein said longitudinal grooves (47) are staggered relative to said longitudinal notches (43).

6. Guide according to any one of the previous claims, wherein the second tubular portion (32) of said bushing (30) has an inner profile substantially corresponding to that of the sliding portion (22) of said bushing (20).

7. Guide according to any one of the previous claims, wherein the first tubular portion (32) of said bushing (30) internally exhibits annular grooves (35) suitable for reducing the surface in contact with the sliding portion (22) of said pin (20).

8. Disc braking system for vehicles, comprising at least one floating calliper mechanically connected to a support structure of said braking system by one or more guides according to any one of the previous claims.

## Patentansprüche

1. Führung für einen Schwimmsattel einer Fahrzeugscheibenbremse, welche zum Anordnen zwischen einer Haltestruktur (B) einer Scheibenbremse und einem Schwimmsattel (A) vorgesehen ist, umfassend:
- einen Stift (20), welcher dafür vorgesehen ist, durch einen Koppelabschnitt (21) an der Haltestruktur (B) oder an dem Schwimmsattel (A) befestigt zu werden und mit einem Gleitabschnitt (22) in einem Gleitsitz (C) gleitend geführt zu werden, welcher in dem Schwimmsattel (A) oder in der Haltestruktur (B) ausgebildet ist;
- eine Buchse (30), welche dafür vorgesehen ist, in den Gleitsitz (C) eingeführt zu werden und innen den Gleitabschnitt (22) des Stifts (20) in Gleitbeziehung aufzunehmen; und
- ein Schließelement (40), welches mit der Buchse (30) in bezüglich dem Koppelabschnitt (21) des Stifts (20) abgewandter Position lösbar verbunden ist, um das Eintreten von Fremdkörpern in die Führung (1) zu verhindern, wobei das Schließelement (40) vollkommen außerhalb der Buchse (30) angeordnet ist
wobei die Buchse (30) einen ersten rohrförmigen Abschnitt (31), welcher zum Einführen in den Gleitsitz (C) vorgesehen ist, und einen zweiten rohrförmigen Abschnitt (32) umfasst, welcher zum Anordnen in der Nähe des Eingangs des Gleitsitzes (C) vorgesehen ist, wobei das Schließelement (40) an den zweiten Abschnitt (32) koppelt und mit einem Becherkörper (41) ausgestattet ist, welcher dafür geeignet ist, den zweiten rohrförmigen Abschnitt (32) der Buchse (30) zumindest teilweise darin aufzunehmen, wobei der zweite rohrförmige Abschnitt (32) außen mit Rippen (33) ausgestattet ist und der Becherkörper (41) mit einem oder mehreren Zähnen (42) ausgestattet ist, welche dafür geeignet sind, haltend an den Rippen (33) einzugreifen;
**dadurch gekennzeichnet, dass** die Zähne (42) in der Nähe der Kante (44) des Becherkörpers (41) ausgebildet sind, welche eine oder mehrere Längskerben (43) aufweist, die zwei oder mehrere freie Ansätze (45) an der Kante (44) begrenzen, und dass der Becherkörper (41) zumindest einen ringförmigen Abschnitt (46) aufweist, welcher gegenüber den freien Ansätzen (45) vergrößert ist, wobei der vergrößerte ringförmige Abschnitt (46) dafür vorgesehen ist, in Passungsbeziehung an dem Schwimmsattel (A) oder an der Haltestruktur (B) einzugreifen.

2. Führung nach Anspruch 1, **dadurch gekennzeichnet, dass** das Schließelement (40) einrastend an die Buchse (30) gekoppelt ist.

3. Führung nach Anspruch 1 oder 2, wobei die Zähne (42) an den freien Ansätzen (41) ausgebildet sind.

4. Führung nach einem der vorhergehenden Ansprüche, wobei der vergrößerte rohrförmige Abschnitt (46) mit mehreren Längsnuten (47) zum Auslassen der Luft ausgestattet ist, welche zwischen dem Schließelement (40) und dem Schwimmsattel (A) oder der Haltestruktur (B) vorhanden ist, wenn der vergrößerte ringförmige Abschnitt (46) an einem dieser Elemente in Passungseingriff steht.

5. Führung nach dem vorhergehenden Anspruch, wobei die Längsnuten (47) gegenüber den Längskerben (43) versetzt sind.

6. Führung nach einem der vorhergehenden Ansprüche, wobei der zweite rohrförmige Abschnitt (32) der Buchse (30) ein Innenprofil hat, welches dem des Gleitabschnitts (22) der Buchse (20) im Wesentlichen entspricht.

7. Führung nach einem der vorhergehenden Ansprüche, wobei der erste rohrförmige Abschnitt (32) der Buchse (30) innen ringförmige Nuten (35) aufweist, welche dafür geeignet sind, die mit dem Gleitabschnitt (22) des Stifts (20) in Kontakt stehende Fläche zu reduzieren.

8. Scheibenbremssystem für Fahrzeuge, umfassend zumindest einen Schwimmsattel, welcher durch eine oder mehrere Führungen nach einem der vorhergehenden Ansprüche mit einer Haltestruktur des Bremssystems mechanisch verbunden ist.

## Revendications

1. Guide pour étriers flottants d'un frein à disque de véhicule, prévu pour être disposé entre une structure de support (B) d'un frein à disque et un étrier flottant (A), comprenant :
- une broche (20), prévue pour être fixée par une partie de couplage (21) à ladite structure de support (B) ou audit étrier flottant (A), et pour être guidée de façon coulissante avec une partie coulissante (22) à l'intérieur d'un siège coulissant (C) obtenu dans ledit étrier flottant (A) ou dans ladite structure de support (B) ;
- une douille (30) prévue pour être insérée dans ledit siège coulissant (C) et pour recevoir de façon interne en relation coulissante la partie coulissante (22) de ladite broche (20) ; et
- un élément de fermeture (40) associé de façon amovible à ladite douille (30) en position opposée par rapport à la partie de couplage (21) de ladite broche (20) pour empêcher l'entrée de matières étrangères dans ledit guide (1), ledit élément de fermeture (40) étant disposé complètement externe à ladite douille (30)
dans lequel ladite douille (30) comprend une première partie tubulaire (31) prévue pour insertion dans ledit siège coulissant (C) et une seconde partie tubulaire (32) prévue pour être placée à proximité de l'entrée dudit siège coulissant (C), ledit élément de fermeture (40) se couplant sur ladite seconde partie (32) et étant pourvu d'un corps en forme de coupelle (41) approprié pour recevoir au moins partiellement la seconde partie tubulaire (32) de ladite douille (30) en son sein, ladite seconde partie tubulaire (32) étant pourvue extérieurement de nervures (33) et ledit corps en forme de coupelle (41) étant pourvu d'une ou plusieurs dents (42) appropriées pour venir en prise en retenue sur lesdites nervures (33),
**caractérisé en ce que** lesdites dents (42) sont obtenues à proximité du bord (44) dudit corps en forme de coupelle (41), qui présente une ou plusieurs encoches longitudinales (43) qui définissent deux ou plus de deux appendices libres (45) au niveau dudit bord (44) et **en ce que** ledit corps en forme de coupelle (41) présente au moins une partie annulaire (46) élargie par rapport auxdits appendices libres (45), ladite partie annulaire élargie (46) étant prévue pour venir en prise en relation d'interférence sur ledit étrier flottant (A) ou sur ladite structure de support (B).

2. Guide selon la revendication 1, **caractérisé en ce que** ledit élément de fermeture (40) est couplé par encliquetage sur ladite douille (30).

3. Guide selon la revendication 1 ou 2, dans lequel lesdites dents (42) sont obtenues sur lesdits appendices libres (41).

4. Guide selon l'une quelconque des revendications précédentes, dans lequel ladite partie tubulaire élargie (46) comporte une pluralité de rainures longitudinales (47) pour évacuer l'air compris entre ledit élément de fermeture (40) et ledit étrier flottant (A) ou ladite structure de support (B) dans le cas où ladite partie annulaire élargie (46) viendrait en prise par interférence sur l'un de ces derniers.

5. Guide selon la revendication précédente, dans lequel lesdites rainures longitudinales (47) sont en quinconce par rapport auxdites encoches longitudinales (43).

6. Guide selon l'une quelconque des revendications précédentes, dans lequel la seconde partie tubulaire (32) de ladite douille (30) a un profil interne correspondant sensiblement à celui de la partie coulissante (22) de ladite douille (20).

7. Guide selon l'une quelconque des revendications précédentes, dans lequel la première partie tubulaire (32) de ladite douille (30) présente à l'intérieur des rainures annulaires (35) appropriées pour réduire la surface en contact avec la partie coulissante (22) de ladite broche (20).

8. Système de freinage à disque destiné à des véhicules, comprenant au moins un étrier flottant relié mécaniquement à une structure de support dudit système de freinage par un ou plusieurs guides selon l'une quelconque des revendications précédentes.
